# EUROPEAN PATENT SPECIFICATION

(11) **EP 0 510 192 B1**
(45) Date of publication and mention of the grant of the patent: **27.09.1995**
(21) Application number: 90916379.2
(22) Date of filing: 13.11.1990
(51) Int. Cl.: B29D 30/08, B29D 30/32, B29D 30/36, B29D 30/52

(54) **APPARATUS FOR AND METHOD OF BUILDING GREEN TIRE**
VORRICHTUNG UND VERFAHREN ZUM ROHREIFENAUFBAU
APPAREIL ET PROCEDE DE CONFECTION DE PNEU CRU

(43) Date of publication of application: 28.10.1992
(73) Proprietor: SUMITOMO RUBBER INDUSTRIES LIMITED, Chuo-ku Kobe-shi Hyogo 651 (JP)
(72) Inventor: KONDO, Kazuaki, 99, Sotoda Takemoto-cho, Aichi 473 (JP); IIMURA, Masaaki, 141-19, Oaza Ganpoji, Fukushima 979-63 (JP)
(74) Representative: Stewart, Charles Geoffrey
(86) International application number: JP9001475
(87) International publication number: WO9208602

(56) References cited:
- DD-A- 272 050
- FR-A- 2 275 307
- GB-A- 2 092 100
- JP-A- 587 339
- JP-A- 1 255 528
- JP-A- 6 143 545
- JP-A- 6 268 732
- JP-A-50 151 282
- JP-A-57 174 236
- JP-A-57 178 739
- JP-B- 4 721 836
- US-A- 3 865 669

## Description

The present invention relates to a green tyre building apparatus and a building method. More particularly, the present invention relates to an improvement in a green tyre building apparatus using transfer ring equipment which is positioned between a green tyre former and a belt former and is moved therebetween, and which transfers a belt-tread assembly formed by the belt former in order to set the assembly to a periphery of a green carcass to be toroidally shaped by the green tyre former, and also relates to a green tyre forming method using the apparatus.

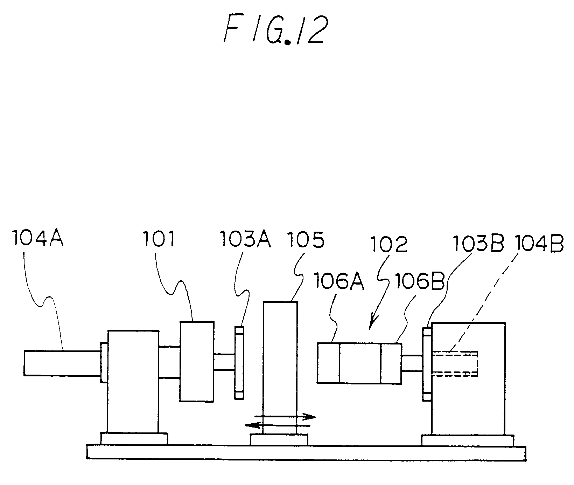

In a conventional green tyre building technique, for example that shown in Fig.12, a belt-tread assembly is assembled on a belt former 101 on one side and a green carcass is assembled on a green tyre former 102 on the other side. Beads are held by bead setting mechanisms 103A, 103B respectively and moved in and set at predetermined positions on the tyre former 102 by air cylinders 104A, 104B. The beads are then fixed to the green carcass by extending the diameters of bead lock mechanisms integrated in first and second shoulder formers 106A, 106B. The belt-tread assembly assembled on the belt former 101 is positioned around the periphery of the green carcass by a transfer mechanism 105 and the green carcass is toroidally shaped by feeding shaping air into the green carcass while moving both shoulder formers 106A, 106B inwardly towards each other by a driving mechanism (not shown). This causes the belt-tread assembly is attached to the green carcass, both edges of the carcass ply are turned up around the beads by expanding ply turn-up bladders provided at the first and the second shoulder formers 106A, 106B. The ply turn-up bladders are further pressed from both outsides by expanding pressing bladders (for example, Japanese Examined Patent Publication No. 705/1974) provided outside of the ply turn-up bladders. Finally the turned-up portion and the side walls of the carcass ply are firmly fixed to the body of the carcass to complete the green tyre.

A conventional apparatus employed in this kind of green tyre forming technique is a complicated mechanism as mentioned above. In the apparatus, for example, the bead setting mechanisms (the bead setters 103A, 103B) for setting the beads at predetermined positions on a green carcass arranged on a green tyre former, and the pressing mechanisms (pressing bladders) for pressing the ply turn-up bladders from the sides thereof are independent and provided separately.

Also, in the conventional tyre forming apparatus, in order to hold and release the belt-tread assembly the transfer mechanism utilises a plurality of segments constituting an inner surface corresponding to the outer surface of the assembly, and a bladder or an air cylinder operated by air pressure for increasing or decreasing the inner diameter of an annular portion constituted by the segments, namely for extension or reduction of the diameter Accordingly, in holding the belt-tread assembly to position it around the periphery of the green carcass and combining the assembly with the green carcass which is shaped toroidally, the air pressure allows the segments to move blocks so that the belt-tread assembly is pushed outwards by the expansion force of the green carcass generated by inner pressure for shaping.

As a result, the outer diameter of the belt and tread tend to expand undesirably, so that there arises a problem that a defective tyre is produced. Further, when the belt-tread assembly is combined with the green carcass, as illustrated inside a dotted circle C in Fig. 11, both edges of the assembly are not firmly adhered to the green carcass, so that afterwards it is necessary to press the edges by a stitcher. As a result, there also arises a problem that, when stitching, the breaker edge may be deformed, or cords snaked or separated whereby the uniformity of a tyre is badly influenced.

Further, in order to remove the finished green tyre from the tyre former, a separate take-out mechanism is provided or the segments of the transfer ring mechanism are utilised. However, there are drawbacks in that the apparatus becomes complicated when the take-out mechanism is separately provided, and it takes much time to take the green tyre from the transfer ring mechanism when the segments are used.

The present invention has an object in solving the above-mentioned drawbacks of the conventional art. It is an object of the present invention to provide a green tyre forming apparatus and forming method wherein constructions of the bead setter and the ply turn-up mechanism are much simplified, each segment of the belt transfer mechanism is maintained at the predetermined position against the expansion force of the carcass when the belt-tread assembly is combined with the green carcass whereby undesirable expansion of the outside diameters of the belt and tread are prevented and production of defective tyres is reduced also it is easy to take out the green tyre so that overall assembly efficiency is improved.

According to one aspect of the present invention that is provided a green tyre building apparatus comprising a belt building mechanism, a transfer ring mechanism, a green tyre building mechanism including first and second shoulder former elements having ply turn-up bladders, a first bead setting mechanism and a second bead setting mechanism, characterised in that the first bead setting mechanism comprises a holding mechanism positioned at one end of a driving shaft of the belt building mechanism and an element for transferring a bead and pushing the ply turn-up bladder wherein the element is attachable and detachable from the holding mechanism, the transfer ring mechanism has joint elements for connecting to the element, the element is held by the joint element and is moved to a bead setting position on the first shoulder former element of the green tyre forming mechanism, whereby end plates of the element can push the ply turn-up bladder arranged at the first shoulder former element when the bladder is expanded; and an element for transferring the bead and pushing the ply turn-up bladder of the second bead setting mechanism is moved by a drive to a bead setting position on the second shoulder former element of the green tyre building mechanism whereby the end plate of the element can push the ply turn-up bladder arranged to the second shoulder former element when the bladder is expanded.

Preferably the transfer ring mechanism comprises a plurality of belt-tread assembly holding element each having a segment and a hydraulic cylinder which moves the segment in the radial direction.

Also preferably the transfer ring mechanism has a green tyre take-out mechanism comprising a receiving bucket for holding a green tyre and green tyre pressing rollers projecting towards the green tyre building mechanism, the mechanism being arranged at a part of the segments which is movable forwards and backwards in the radial direction.

According to another aspect of the present invention there is provided a method of forming a green tyre utilising a machine comprising a belt former section arranged coaxially with a transfer ring mechanism and a green tyre shaping former section including at its axial ends first and second shoulder former elements and ply turn-up bladders, the method comprising building on the shaping former section a cylindrical carcass ply reinforcement, fitting beads to either end of the cylindrical carcass ply reinforcement, assembling a belt-tread assembly on the belt former section, transferring the tread-belt assembly from the belt former section by means of the transfer ring mechanism to a position centrally of the shaping former section and expanding the shaping former section to shape the cylindrical carcass ply reinforcement into the belt-tread assembly, turning the ends of the carcass ply reinforcement around the beads by expanding the turn-up bladders, characterised by mounting a bead on a removable element held detachably in first bead setting mechanism which mechanism is mounted on the axial end of the belt former section and after forming the cylindrical carcass ply reinforcement moving the transfer ring mechanism to a position where it is concentric with the first bead setting mechanism, moving the transfer ring mechanism together with the removable element in the axial direction to position the bead over the cylindrical carcass ply reinforcement on the shaping former section, expanding the first shoulder former element of the shaping former section in the radial direction to hold the bead, detaching the removable element from the bead and moving the removable element to a position axially outward of the end of the shaping former section by means of the transfer ring mechanism.

Preferably the method of the invention also comprises consolidating the turn-up ends of the carcass ply reinforcement by moving the removable element by means of the transfer ring mechanism and a second bead setting mechanism axially inward from positions axially outward of respective ends of the shaping former section to push on the respective expanded turn-up bladders.

### BRIEF DESCRIPTION OF THE DRAWINGS

An embodiment of the present invention will now be explained based on the accompanying drawings. However, it should be noted that the present invention is not limited to the embodiment.
Fig. 1 is a front view showing a general construction of an embodiment of the present invention;
Fig. 2 is a sectional view of a belt building section and a first bead setting mechanism;
Fig.3. is a front view of a holding element of the first bead setting mechanism.
Fig.4. is a front view of a transfer mechanism.
Fig.5. is an axial sectional view of the transfer mechanism.
Fig.6. is a schematic longitudinal fragmentary section view of a ply turn-up bladder.
Fig.7. is an explanatory illustration showing a state wherein a ply turn-up bladder is pushed by an element for transfer ring the bead and pushing the ply turn-up bladder;
Fig.8. is a sectional view of the main part of an element for transfer ring the bead and pushing the ply turn-up bladder of a second bead setting mechanism.
Fig.9. is a general flow diagram of a driving system of a segment for holding a belt-tread assembly of the transfer ring mechanism.
Fig.10 is an explanatory illustration showing a forming operation by extending segments for holding a belt-tread assembly of the transfer ring mechanism.
Fig.11. is a schematic sectional view showing a part of a green tyre to which no good adhesion easily occurs; and
Fig.12. is a schematic illustration of a
conventional tyre forming apparatus.

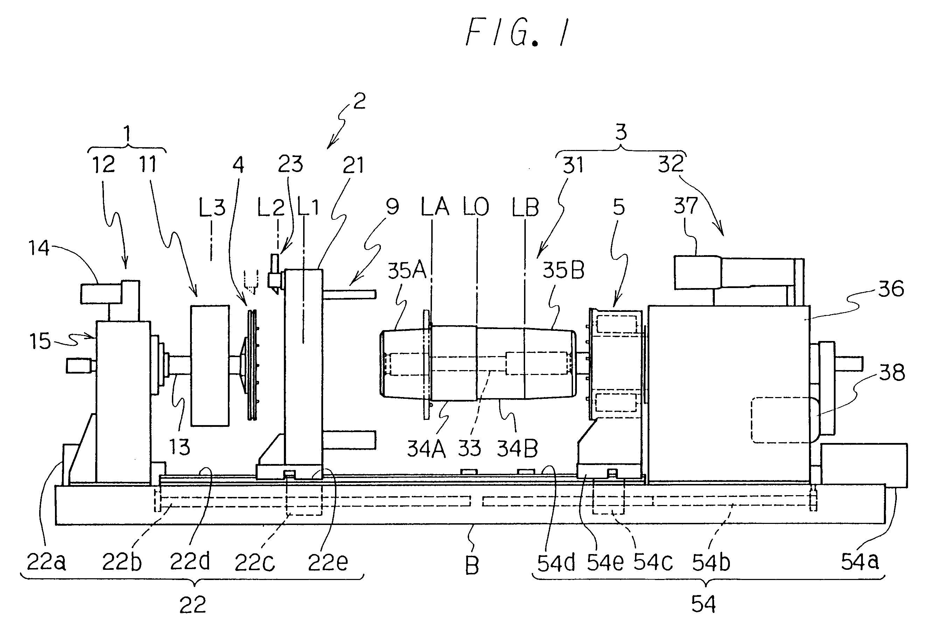

The green tyre building apparatus in Fig.1. comprises a belt building mechanism 1, a transfer mechanism 2, a green tyre forming mechanism 3, a first bead setting mechanism 4 and a second bead setting mechanism 5, each being arranged on a single base unit B.

The component feeding apparatus for the belt building mechanism 1 and the green tyre building mechanism 3 is the same as a conventional one, and therefore the explanation and illustration therefore are omitted.

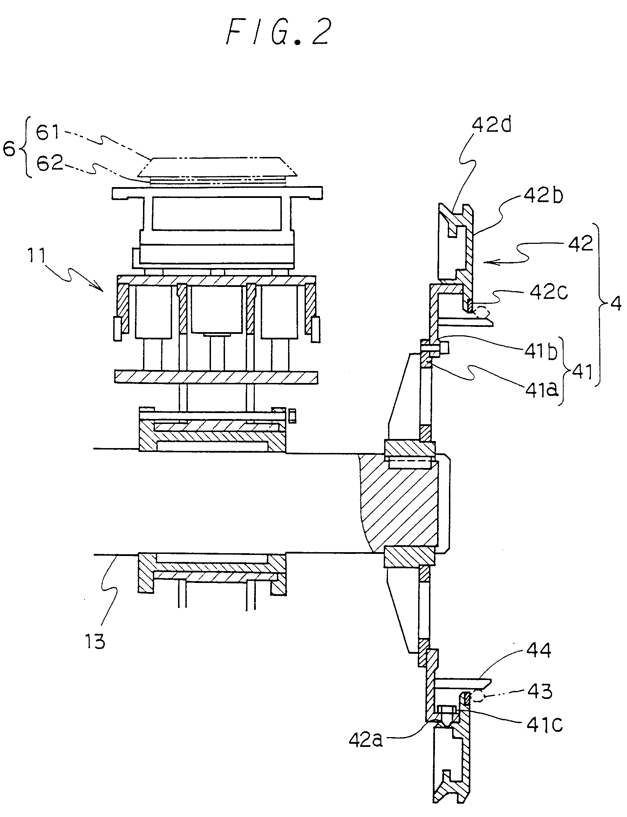

The belt building mechanism 1 comprises a belt former section 11 and a belt former driving section 12. A driving shaft 13 for the belt former driving section 12 has a free end penetrating through the belt forming section 11. The belt forming section 11 forms a belt-tread assembly 6 on its periphery (see Fig. 2.) The construction of the belt forming section 11 is the same as the conventional one, and therefore the detailed explanation thereof is omitted. The driving section 12 comprises a driving shaft 13, a motor 14 for rotating the shaft 13 and a supporting element 15.

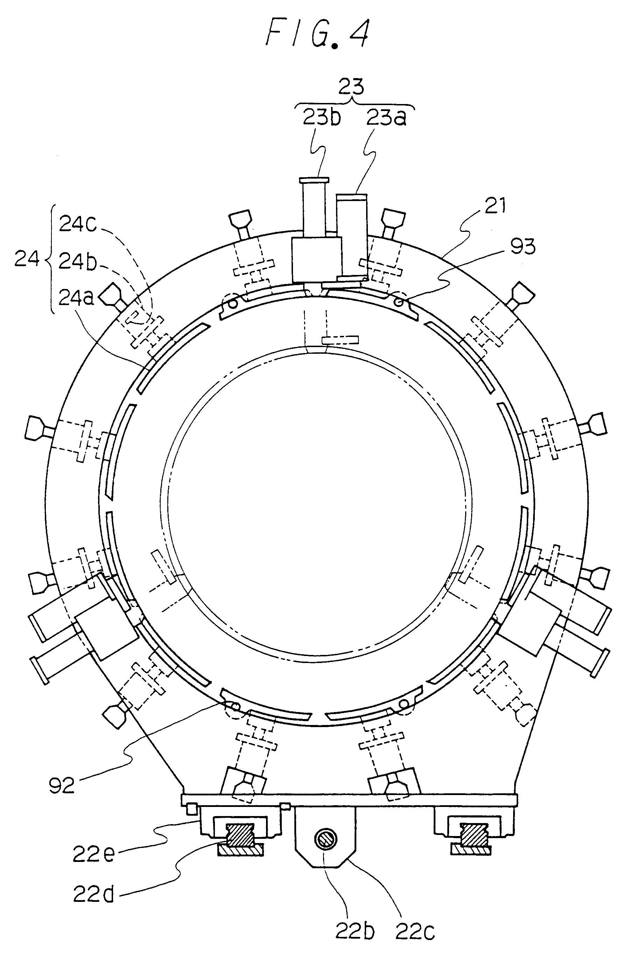

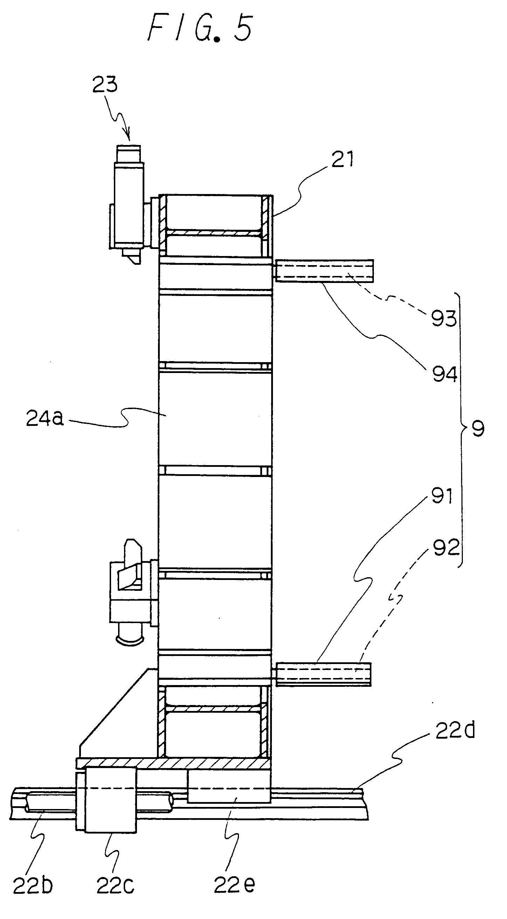

The transfer mechanism (hereinafter it is occasionally referred to as a transfer) 2 comprises a ring-shaped frame element 21, a driving section 22 for moving the frame element 21, joint elements 23 for engaging and joining with an element 42 for transfer ring a bead and pushing a ply turn-up bladder, and elements 24 to hold a belt-tread assembly (see Figs. 4 and 5). The frame element 21 is reciprocately movable along the longitudinal direction of the base unit B between the belt forming mechanism 1 and the green tyre forming mechanism 3 by driving the driving section 22. Any conventional assembly used for this kind of driving mechanism can be employed as the driving section 22. As one example of a driving mechanisms, there is exemplified a driving means comprising a motor 22a, a driving screw element 22b and a female screw block 22c coupled with the element 22b, a rail 22d and a slide element 22e slidably engaged with the slide rail.

The holding element 24 for holding the belt-tread assembly, will be described later.

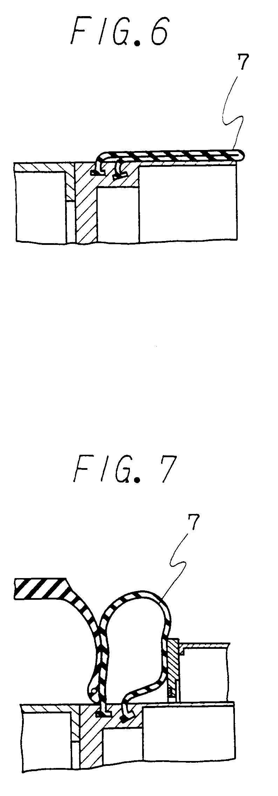

The green tyre building mechanism 3 comprises a shaping former section 31 and a driving section 32 therefore. The shaping former section 31 is cantileveredly supported on a main shaft 33 projecting from the driving section 32. The section 41 has shaping elements 34A, 34B of telescope type, and a first and a second shoulder former elements 35A, 35B. The shaping elements 34A, 45B and of telescope type are solid cylinders respectively supported by the first and the second shoulder former elements 35A, 35B, and the diameters of the cylinders are slightly different from each other. Thereby, in shoulder shaping, at the time of the so-called bead-distance shortening in which the first and the second shoulder former elements 35A, 35B inwardly approach each other in axial direction, one of the cylinders can telescopically go inside the other cylinder, so that the former width is narrowed. In the drawing, numeral 36 represents a supporting element which cantileveringly supports and rotates the main shaft 33, and numeral 37 represents a motor for inwardly driving the first and the second shoulder former elements 35A, 35B. Numeral 38 represents a second motor for driving the main shaft 33. As shown in Figs. 6 to 7, the shaping former section 31 has a ply turn-up bladder 7 on the periphery of the first and the second shoulder former elements 35A, 35B, and has a bead lock mechanism (not shown) of known construction (for example, Japanese Examined Patent Publication No. 38097/1984) which enable the diameter thereof to expand and contract.

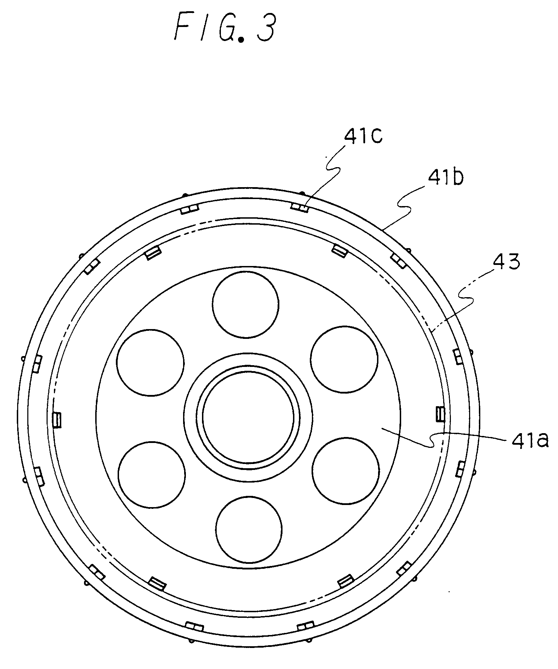

At the free end of the driving shaft 13, the first bead setting mechanism 4 is arranged. As shown in Figs. 2 to 3, the first bead setting mechanism 4 comprises a holding element 41 engaged with the free end of the driving shaft 13 and an element 42 for transfer ring a bead and pushing the ply turn-up bladders detachably engaged with the holding elements 41.

The holding element 41 of the first bead setting mechanism 4 comprises a disc-like element 41a mounted at the end of the driving shaft 13 and a short cylindrical element 41b connected around the periphery of the disk-like element 41a. At the short cylindrical element 41b, bead supporting elements 44 are placed perpendicularly therefrom extending towards the green tyre forming mechanism 3 so as to contact the inner circumference of a bead 43 at six points and thus the bead 43 can be positioned around an extended axis of the driving shaft 13. The element 42 is shaped as a ring, as shown in Fig.2, and is engaged on the outer circumference of the short cylindrical element 41b in such a manner that the element 42 can be removed in the direction of the green tyre forming mechanism 3.

As shown in Figs. 2 to 3, the engaging portion is constructed in such a manner that ball plungers 41c are arranged in the short cylindrical element 41b so that the tips of the ball pluggers peep from the periphery of the element 41b, and a groove 42a is arranged at the inner surface, corresponding in position to the ball, plungers, so that the element 42 is retained therein. In this jointed state, the end face 42b of the element 42 facing the tyre forming section is formed flat, and is positioned behind the tip of the bead supporting element by a bead width. The end face 42b functions as a pushing face for the ply turn-up bladder.

In addition, a bead holding part 42c provides at a position of the end face 42b where the bead 43 contacts by embedding permanent magnets in the end force for holding the bead 43. The bead holding part 42c thus may attract and holds a bead 43 when the bead 43 is supported by the bead supporting elements 44. The bead holding part 42c is detachable. Further, on the periphery of the element 42 for transferring a bead and pushing ply turn-up bladders, a concave groove 42d is provided to be engaged by a joint element 23.

Each joint element 23 comprises, as shown in Figs, 1, 4 and 5, an air cylinder 23a and a joint piece 23b driven by the air cylinder 23a. Three joint elements 23 are arranged on the surface, facing the belt former 11, of the ring shaped frame element 21. The joint pieces 23b are moved inwardly by pressurising the air cylinders 23a, and thereby the joint pieces 23b enter the concave groove 42b to engage with and hold the element 42.

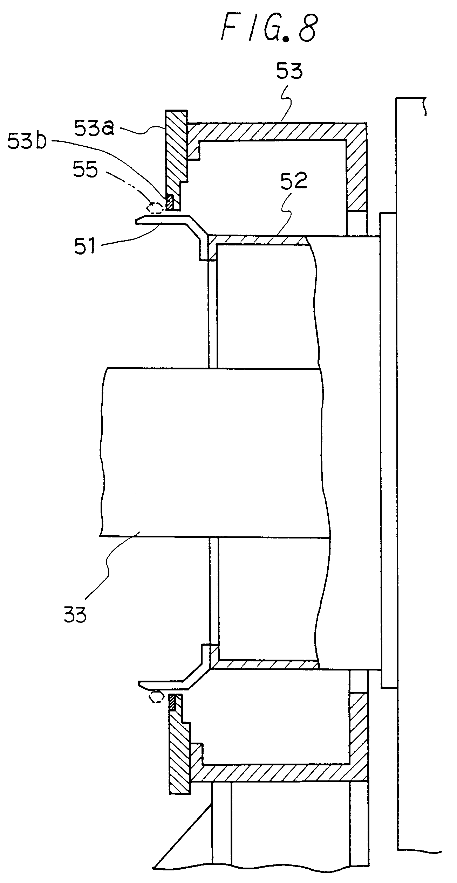

The second bead setting mechanism 5 comprises a bead holding element 51, a supporting element 52 an element 53 for transferring a bead and pushing ply turn-up bladders, and a driving portion 54 for the element 53. The supporting element 52 is fixed to the casing of the supporting element 36 in such a manner that the supporting element 52 is coaxial with the main shaft 33 as shown in Figs. 1 and 8. On the surface, facing the shaping former section, of the supporting element 52 a bead holding element 51 is provided. Outside the bead holding element 51 and the supporting element 52, the element 53 for transferring a bead and pushing the ply turn-up bladders is arranged. The element 53 is reciprocally movable between the shaping former section 31 and the driving section 43 by driving a driving portion 54 for the element 53. As the driving portion 54 for the element 53, any kind of conventional transfer mechanism can be employed. As one example thereof, there is examplified a mechanism comprising a motor 54a, a driving screw element 54b and a female screw block 54c coupled therewith. A slide rail 54d and a slide block 54e are slidable engaged therewith. Also, the surface 53a of the element 53 contacting with the bead is constructed similar to the surface 42b of the element 42 of the first bead setting mechanism 4.

That is, a bead holding part 53b is arranged at a position with which the bead 55 contacts. Therefore, the element 53 for transferring a bead and pushing the ply turn-up bladders can move whilst holding the bead 55, and can push the ply turn-up bladder.

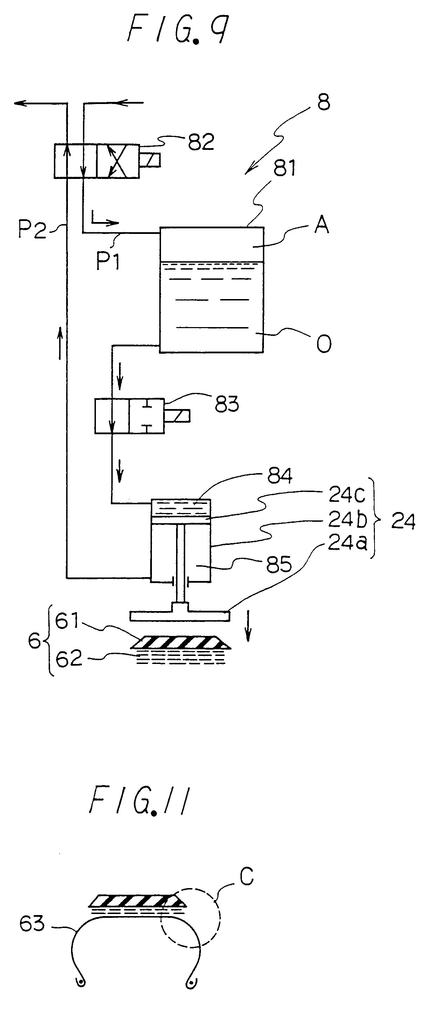

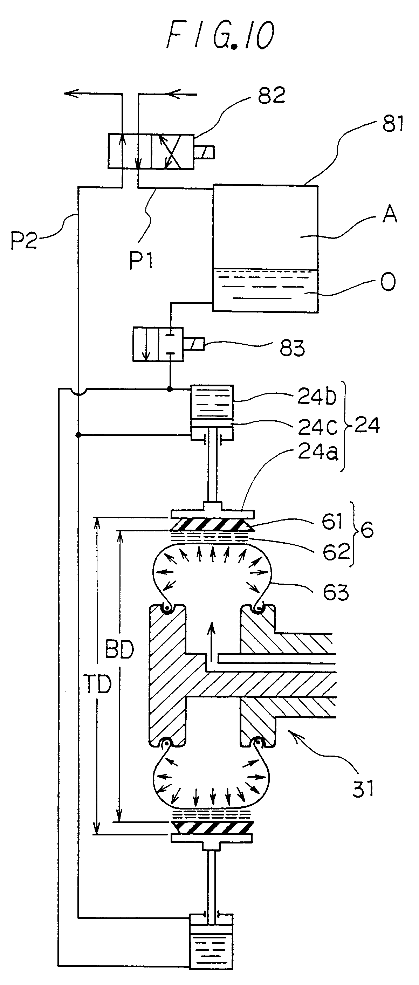

As shown in Figs. 4 and 5, in the transfer mechanism 2, a plurality of holding elements 24 for holding the belt-tread assembly by touching the outer circumference of it are arranged in a circumferential direction on the periphery of the ring shaped frame element 21 in a manner that the holding elements 24 form an annular shape. Each holding element 24 comprises a segment 24a and a hydraulic cylinder 24b driving the segment 24a forwards and backward in a radial direction. Each hydraulic cylinder 24b is connected to a hydraulic driving apparatus 8 as shown in Figs 9 and 10.

The hydraulic driving apparatus 8 comprises an air-hydraulic tank 81, an electromagnetic switching valve 82 for air, an electromagnetic switching valve 83 for oil, and piping connecting to the hydraulic cylinders 24b. In the air-hydraulic tank 81 these are air A and oil O. Air is fed into the air-hydraulic tank 81 from an air source (not shown) through piping via the electromagnetic switching valve 82. Oil O in the air hydraulic tank 81 is fed into an oil chamber 84 of the hydraulic cylinder 24b through piping via the electromagnetic switching valve 83. Air contained in the air chamber 85 of the hydraulic cylinder 24b is exhausted through the piping via the electromagnetic switching valve 82.

Fig.9. shows a state wherein in order to hold the belt-tread assembly 6 formed on the belt forming section 11 the segments 24a thereof are moving inwardly. That is, air is fed into the air-hydraulic tank 81 from the air source through the piping so that oil is supplied to each cylinder 24b from the air-hydraulic tank 81 and simultaneously air contained in each cylinder 24b is exhausted through piping p2, so that each piston is pushed only by oil. As a result, each segment 24a moves towards the centre in a radial direction, whereby each segment 24a contacts with and holds the belt-tread assembly 6. Thereafter, the diameter of the belt forming section 11 is decreased, whereby the belt-tread assembly can be removed from the belt forming section 11. In Fig. 9. when the electromagnetic switching valve 82 is switched, the air feeding side and the air exhausting side are changed mutually so the air is supplied through the piping p2 and air is exhausted through the piping p1, so that the piston 24c is moved in the reverse direction. Thus, the segment 24a is moved backwards from the centre of the belt forming section 11. For example, after the belt-tread assembly 6 is adhered to the toroidally shaped green carcass 63 by pressing, the above-mentioned movement of the segment 24a is carried out.

Fig.10 shows a state wherein the transfer ring 2 is in a standby condition with the belt-tread 6 assembly positioned at a normal position (centre) on the shaping former section 31. The green carcass 63 on the shaping former section 31 is toroidally shaped by the influence of the internal pressure IP and so the green carcass 63 presses the belt-tread assembly 6 at the stand-by position, and the expansion force of the internal pressure IP for shaping (such force as to backwardly move the piston 24c of the hydraulic cylinder 24b of the transfer ring 2, namely the segment 24a) is generated. At this time, namely at the same time the shaping starts, the electromagnetic switching valve 83 for oil is switched to the closed position, so that oil is sealed in the oil chamber 84 of the hydraulic cylinder 24b. Since oil, unlike air, is a substantially incompressible fluid, the piston 24c and the segment 24a are not moved backward by the expansion force generated by the internal pressure for shaping although the oil pressure of the hydraulic cylinder 24b is raised when shaping is progressed. As a result, two functions, occur firstly, the outer diameter of belt BD and the outer diameter of tread TD are maintained at the normal dimensions; and secondarily, as shown in Fig.10, the assembly of the belt 62 and the tread 61 is adhered to the shaped green carcass by pressing whilst being held by the segments 24a in a flat position.

Therefore, there are thoroughly resolved and overcome such defects in conventional system wherein the segments 24a are moved back and forth with air cylinders, that progress of the shaping causes the piston 24c and the segment 24a to be moved backward, whereby the respective outer diameters of belt and tread are undesirably expanded to make the green carcass become defective. Also is avoided the need as shown in Fig.11 by a dotted circular line C for the belt-tread assembly 6 to be adhered to the carcass forcibly by using a stitcher in a following step when the breaker edge is deformed, cord snaking or cord separation is caused which gives bad influences on the uniformity of the tyre.

The hydraulic cylinder 24b is designed to stand hydraulic pressure tip to 210 Kg/cm2. A transfer ring which can move the segments 24a by using the hydraulic cylinders 24b can be applied not only to a former of the so-called telescope type but also to a forming apparatus in which shaping is carried out by using a former which enables a shoulder such as a rubber former to move a long distance (namely, to shorten the distance of the beads).

Further, in this embodiment, as shown in Fig. 5, the transfer mechanism 2 has a green tyre take-out mechanism 9. The green tyre take-out mechanism 9 comprises a green tyre receiving bucket 91, bucket supporting elements 92, tyre pressing roll shafts 93, and tyre pressing rollers 94. The green tyre receiving bucket 91 is formed in a circular arc in order to support the green tyre thereon. The bucket supporting elements 92 are fixed to two of the segments 24a at the lower part of the transfer ring mechanism 2, and are extended toward the shaping former section 31 by about green tyre width. The tyre pressing roll shafts 93 are fixed to two of the segments 24a at the upper part of the transfer ring mechanism 2, and are extended toward the shaping former section 31 by about green width like the bucket supporting elements 92. The tyre pressing rolls 94 are rotatably supported by the roll shafts 93. It is preferable that the tyre pressing shafts 93 are positioned that the tyre pressing shaft 93 are positioned to correspond with the bucket supporting elements 92.

The green tyre take-out mechanism 9 hold a green tyre completed by the green tyre forming mechanism 3 to remove it, and the tyre taken is transferred to a transfer carrier by a worker.

Next, a green tyre building method using the green tyre forming apparatus is described.

As shown in Fig.2, the element 42 for transferring a bead and pushing the ply turn-up bladders of the first bead setting mechanism is held by the holding element 41 and is in a stand-by condition. In this condition, the bead 43 is fitted on the bead supporting element 44. On the other side, as shown in Fig.8, the element 53 for transferring a bead and pushing the ply turn-up bladders of the second bead setting mechanism is similarly in a stand-by condition. In this condition, a bead 55 is also fitted to the bead holding element 51.

At this time, the transfer ring mechanism 2 is positioned at LA side by green tyre width from the former centre position LO of the shaping former 31 shown in Fig.1. and holds the completed green tyre by means of the green tyre take-out mechanism 9.

In this condition, the transfer mechanism 2 returns to the stand-by position L1.

When the transfer mechanism 2 returns to the stand-by position L1, the segments 24a are moved backward. Thus, the tyre pressing rollers 94 which are supported by the transfer ring mechanism 2 through the segments 24a are raised, and at the same time the bucket 91 is moved downward, so that the green tyre is released.

The green tyre is transferred to the transfer carrier from the bucket 91 by a worker.

The transfer mechanism 2 is moved from the stand-by position L1 to the transferring position L2.

The joint elements 23 of the transfer ring mechanism 2 are driven, and the joint pieces 23b are extended toward the centre and joined to the concave groove 42d, whereby the element 42 for transfer ring a bead and pushing ply turn-up bladders is held.

The transfer mechanism 2 returns to the stand-by position L1. At this time, the bead 43 is attracted and held by the bead holding part 42C.

Meanwhile, on the shaping section 31 of which the first and the second shoulder former elements 35A, 35B are in the fully expanded condition, tyre component materials are sequentially applied thereto to assemble a cylindrical green carcass.

After the shaping of the green carcass is completed, the transfer mechanism 2 and the element 53 for transferring a bead and pushing the ply turn-up bladders of the second bead setting mechanism 5 are moved toward the shaping former section 31. At this time, the bead 55 is attracted by bead by holding part 53b of the elements 53.

When the elements 42 and 53 reach the bead setting position LA, LB of the shaping former section 31 respectively, the transfer mechanism 2 and the element 53 stop.

The bead lock mechanisms of the first and the second shoulder former elements 35A, 35B are expanded to lift the carcass and the beads 43 and 55 to touch the carcass to be fixed. At the same time, the transfer mechanism 2 returns to the stand-by position L1 and the elements 53 for transferring a bead and pushing the ply turn-up bladders returns to the stand-by position respectively.
The transfer mechanism 2 is moved to the transferring position L2.

The joint pieces of the transfer ring mechanism 2 are driven to back. As a result, the element 42 for transferring a bead and by pushing ply turn-up bladders is released and then held by the holding element 41.

The transfer ring mechanism 2 is moved to the former centre L3 of the belt forming section 11.

The belt-tread assembly holding elements 24 of the transfer ring mechanism 2 are driven, and thereby the segments 24a are moved towards the centre. As a result, the diameter of the holding element 24 is decreased to hold the belt-tread assembly 6.

The transfer ring mechanism 2 returns to the stand-by position L1.

The transfer ring mechanism 2 is moved to the former centre LO of the shaping former section 31 to set the belt-tread assembly 6 to the green carcass on the shaping former section 31.

The first and the second shoulder former elements 35A, 35B are driven by the motor 37 so that the shoulder former elements are moved towards the former centre respectively from the fully expanded condition along the axis, thereby the distance between the beads is shortened.

At the same time, internal pressure IP is fed into the carcass and thus shaping is started to shape the carcass toroidally.

The first and the second shoulder former elements are closed. Shaping is progressed to the stopping position, and thereby the top of the carcass in its toroidal shape comes into contact and is applied with pressure to the belt-tread assembly 6 in its stand-by position.

Tread shoulder is applied with pressure by a stitcher.

The transfer mechanism 2 is returned to the stand-by position L1.

The transfer ring mechanism 2 is moved to the transferring position L2 to receive the element 42 for transferring a bead and pushing ply turn up bladders (without bead), and returns to the stand-by position L1.

The turn-up bladders 7, 7 of the first and the second shoulder element 35A, 35B are expanded to turn up the side wall and edge of ply around the beads.

After a predetermined period of time has passed, the element 42 held by the transfer ring mechanism 2 and the element 53 are mutually moved toward the shaping former section 31. Then, the bladders 7, 7 under expansion are pushed respectively by the edge plate 42a and 53a to the predetermined pressing limit, and thereby the turn-up is completed.

The transfer ring mechanism 2 returns to the stand-by position L1 and the element 53 for transfer ring a bead and pushing ply turn-up bladders returns to the stand-by position.

In another embodiment, a green carcass is not formed by a green tyre former but formed by another band forming machine. This green carcass is set to the shaping former section 31, and thereafter bead setting, shaping and turn-up be carried out by the apparatus of the present invention.

According to the present invention, pushing of the ply turn-up bladders is carried out by the bead setting mechanism, so that a conventional bladder pushing mechanism can be omitted. In addition, one of the beads is transferred by the transfer ring mechanism, so that one of the bead transfer ring mechanisms can be omitted. As a result, the apparatus can be simplified and maintenance of bead setting accuracy becomes easy. Further, maintenance of accuracy of the forming apparatus becomes easy. Still further, the total length of the apparatus can be shortened. Because driving of the segments of the belt-tread assembly holding element is carried out by hydraulic cylinders, movement of the segments due to pressure generated in the green carcass at the shaping can be prevented so that the outer diameter of the belt is not undesirably expanded. As a result, production of a defective tyre can be prevented. The transfer mechanism is provided with the green tyre take-out mechanism, so that a green tyre take-out mechanism having been separately arranged can be omitted, whereby the apparatus is simplified and efficiency of take-out work is improved.

Accordingly to the forming method of the present invention, the transfer ring mechanism for the belt-tread assembly transfers the element for transferring a bead and pushing the ply turn-up bladders, holding a bead, of the bead setting mechanism from the stand-by position to the bead setting position on the green tyre forming mechanism and thereby the bead lock is completed. At the same time, the element for transferring a bead and the pushing ply turn-up bladders, holding a bead, of the second bead setting mechanism is transferred by the driving section from the stand-by position to the bead setting position on the green tyre forming mechanism and thereby the bead lock is completed. Thereafter the cylindrical carcass on the green tyre forming mechanism is formed into a toroidal shape and both edge portions of the carcass are turned up by expansion of the turn-up bladders. At this time, the transfer mechanism transfers the element for transferring a bead and pushing the ply turn-up bladders from the stand-by position toward the green tyre forming mechanism and the expanded turn-up bladders are pushed from the side face. At the same time, the element for transferring a bead and pushing the ply turn-up bladders is transferred towards the green tyre forming mechanism by the driving section and the expanded turn-up bladders are pushed from the side face. Thus each turn-up of the edges of the carcass is completed.

According to the first aspect of the present invention the function of pushing the ply turn-up bladders is added to the bead setting mechanism so that conventional bladder pushing mechanism is omitted to simplify the apparatus.

According to the second aspect of the present invention, driving of the segments of the belt-tread assembly holding element is carried out by hydraulic cylinders, movement of the segments due to pressure generated in the green carcass at the shaping can be prevented so that the outer diameter of the belt is not undesirably expanded. As a result, production of a defective tyre is prevented.

According to the third aspect of the present invention, the transfer mechanism is equipped with the green tyre take-out mechanism, so that the green tyre take-out mechanism previously provided can be omitted to simplify the apparatus and improve efficiency of the take-out step.

## Claims

1. A green tyre building apparatus comprising a belt building mechanism (1), a transfer ring mechanism (2), a green tyre building mechanism (3) including first and second shoulder former elements (35A,35B) having ply turn-up bladders (7), a first bead setting mechanism (4) and a second bead setting mechanism (5), characterised in that the first bead setting mechanism (4) comprises a holding mechanism (41) positioned at one end of a driving shaft (13) of the belt building mechanism (1) and an element (42) for transferring a bead and pushing the ply turn-up bladder (7) wherein the element (42) is attachable and detachable from the holding mechanism (41), the transfer ring mechanism (2) has joint elements (23) for connecting to the element (42), the element (42) is held by the joint element (23) and is moved to a bead setting position on the first shoulder former element (35A) of the green tyre forming mechanism (3), whereby end plates of the element (42) can push the ply turn-up bladder (7) arranged at the first shoulder former element (35A) when the bladder (7) is expanded; and an element (53) for transferring the bead and pushing the ply turn-up bladder (7) of the second bead setting mechanism (5) is moved by a drive (54) to a bead setting position on the second shoulder former element (35B) of the green tyre building mechanism (3) whereby the end plate of the element (53) can push the ply turn-up bladder (7) arranged to the second shoulder former element (35B) when the bladder (7) is expanded.

2. A green tyre building apparatus according to claim 1, characterised in that the transfer ring mechanism (2) comprises a plurality of belt-tread assembly holding element (24) each having a segment (24a) and a hydraulic cylinder (24b) which moves the segment (24a) in the radial direction.

3. A green tyre building apparatus according to claim 1 or claim 2, characterised in that the transfer ring mechanism (2) has a green tyre take-out mechanism (9) comprising a receiving bucket (91) for holding a green tyre and green tyre pressing rollers (94) projecting towards the green tyre building mechanism (3), the mechanism (9) being arranged at a part of the segments which is movable forwards and backwards in the radial direction.

4. A method of forming a green tyre utilising a machine comprising a belt former section (11) arranged coaxially with a transfer ring mechanism (2) and a green tyre shaping former section (31) including at its axial ends first and second shoulder former elements (35A,35B) and ply turn-up bladders (7), the method comprising building on the shaping former section (31) a cylindrical carcass ply reinforcement, fitting beads (43,55) to either end of the cylindrical carcass ply reinforcement, assembling a belt-tread assembly (6) on the belt former section (11), transferring the tread-belt assembly (6) from the belt former section (11) by means of the transfer ring mechanism (2) to a position centrally of the shaping former section (31) and expanding the shaping former section to shape the cylindrical carcass ply reinforcement into the belt-tread assembly (6), turning the ends of the carcass ply reinforcement around the beads (43,55) by expanding the turn-up bladders (7), characterised by mounting a bead (43) on a removable element (42) held detachably in first bead setting mechanism (4) which mechanism is mounted on the axial end of the belt former section (11) and after forming the cylindrical carcass ply reinforcement moving the transfer ring mechanism (2) to a position where it is concentric with the first bead setting mechanism (4), moving the transfer ring mechanism (2) together with the removable element (42) in the axial direction to position the bead (43) over the cylindrical carcass ply reinforcement on the shaping former section (31), expanding the first shoulder former element (35A) of the shaping former section (31) in the radial direction to hold the bead (43), detaching the removable element (42) from the bead (43) and moving the removable element (42) to a position axially outward of the end of the shaping former section (31) by means of the transfer ring mechanism (2).

5. A method of forming a green tyre according to claim 4, characterised by consolidating the turn-up ends of the carcass ply reinforcement by moving the removable element (42) by means of the transfer ring mechanism (2) and a second bead setting mechanism (5) axially inward from positions axially outward of respective ends of the shaping former section (31) to push on the respective expanded turn-up bladders (7).

## Patentansprüche

1. Eine Rohreifenaufbauvorrichtung mit einem Gürtelaufbaumechanismus (1), einem Transferringmechanismus (2), einem Rohreifenaufbaumechanismus (3), der erste und zweite Schulterformgeberelemente (35A, 35B) mit Lagenumschlagheizmembranen (7) umfaßt, einem ersten Wulstansetzmechanismus (4) und einem zweiten Wulstansetzmechanismus (5),
dadurch **gekennzeichnet,**
daß der erste Wulstansetzmechanismus (4) umfaßt einen Haltemechanismus (41), der an einem Ende einer Antriebswelle (13) des Gürtelaufbaumechanismus (1) positioniert ist, und ein Element (42) zum Transferieren eines Wulstes und zum Drücken der Lagenumschlagheizmembran (7), worin das Element (42) anbringbar an und abnehmbar von dem Haltemechanismus (41) ist, der Transferringmechanismus (2) Verbindungselemente (23) zur Verbindung mit dem Element (42) aufweist, das Element (42) durch das Verbindungselement (23) gehalten und in eine Wulstansetzposition auf dem ersten Schulterformgeberelement (35A) des Rohreifenformgebungsmechanismus (3) bewegt wird, wodurch Endplatten des Elements (42) die Lagenumschlagheizmembran (7) drücken können, welche an dem ersten Schulterformgeberelement (35A) angeordnet ist, wenn die Heizmembran (7) erweitert ist; und daß ein Element (53) zum Transferieren des Wulstes und zum Drücken der Lagenumschlagheizmembran (7) des zweiten Wulstansetzmechanismus (5) durch einen Antrieb (54) in eine Wulstansetzposition auf dem zweiten Schulterformgeberelement (35B) des Rohreifenaufbaumechanismus (3) bewegt wird, wodurch die Endplatte des Elements (53) die Lagenumschlagheizmembran (7) drücken kann, welche an dem zweiten Schulterformgeberelement (35B) angeordnet ist, wenn die Heizmembran (7) erweitert ist.

2. Eine Rohreifenaufbauvorrichtung nach Anspruch 1,
dadurch **gekennzeichnet,**
daß der Transferringmechanismus (2) eine Vielzahl von Gürtel-Laufflächenanordnungshalteelementen (24) umfaßt, die jeweils ein Segment (24a) und einen Hydraulikzylinder (24b) aufweisen, welcher das Segment (24a) in der radialen Richtung bewegt.

3. Eine Rohreifenaufbauvorrichtung nach Anspruch 1 oder 2,
dadurch **gekennzeichnet,**
daß der Transferringmechanismus (2) einen Rohreifenherausnahmemechanismus (9) aufweist, welcher eine Aufnahmewanne (91) zum Halten eines Rohreifens und Rohreifenpreßrollen (94) umfaßt, welche auf den Rohreifenaufbaumechanismus (3) zu vorstehen, wobei der Mechanismus (9) an einem Teil der Segmente angeordnet ist, welcher vorwärts und rückwärts in der radialen Richtung bewegbar ist.

4. Ein Verfahren zum Formen eines Rohreifens, welches eine Maschine verwendet mit einem Gürtelformgeberabschnitt (11), welcher koaxial zu einem Transferringmechanismus (2) angeordnet ist, und einem Rohreifengestaltungsformgeberabschnitt (31), welcher an seinen axialen Enden erste und zweite Schulterformgeberelemente (35A, 35B) und Lagenumschlagheizmembranen (7) umfaßt, wobei das Verfahren die Schritte umfaßt, daß auf dem Gestaltungsformgeberabschnitt (31) eine zylindrische Karkassenlagenverstärkung aufgebaut wird, daß Wülste (43, 55) an beiden Enden der zylindrischen Karkassenlagenverstärkung angepaßt werden, daß eine Gürtel-Laufflächenanordnung (6) auf dem Gürtelformgeberabschnitt (11) zusammengebaut wird, daß die Laufflächen-Gürtelanordnung (6) von dem Gürtelformgeberabschnitt (11) mittels des Transferringmechanismus (2) in eine Position zentral bezüglich des Gestaltungsformgeberabschnitts (31) transferiert und der Gestaltungsformgeberabschnitt erweitert wird, um die zylindrische Karkassenlagenverstärkung in die Gürtel-Laufflächenanordnung (6) hineinzuformen, und daß die Enden der Karkassenlagenverstärkung um die Wülste (43, 55) herum durch Erweitern der Lagenumschlagheizmembranen (7) umgeschlagen werden,
**gekennzeichnet** durch die Schritte,
daß ein Wulst (43) auf einem entfernbaren Element (42) befestigt wird, welches abnehmbar in einem ersten Wulstansetzmechanismus (4) gehalten wird, welcher auf dem axialen Ende des Gürtelformgeberabschnitts (11) befestigt ist, und daß nach dem Ausbilden der zylindrischen Karkassenlagenverstärkung der Transferringmechanismus (2) in eine Position bewegt wird, wo er konzentrisch zum ersten Wulstansetzmechanismus (4) ist, daß der Transferringmechanismus (2) zusammen mit dem entfernbaren Element (42) in der axialen Richtung bewegt wird, um den Wulst (43) über der zylindrischen Karkassenlagenverstärkung auf dem Gestaltungsformgeberabschnitt (31) zu positionieren, daß das erste Schulterformgeberelement (35A) des Gestaltungsformgeberabschnitts (31) in der radialen Richtung erweitert wird, um den Wulst (43) zu halten, daß das entfernbare Element (42) von dem Wulst (43) abgenommen wird, und daß das entfernbare Element (42) in eine Position axial außerhalb des Endes des Gestaltungsformgeberabschnitts (31) mittels des Transferringmechanismus (2) bewegt wird.

5. Ein Verfahren zum Formen eines Rohreifens nach Anspruch 4,
dadurch **gekennzeichnet,**
daß die Umschlagenden der Karkassenlagenverstärkung verfestigt werden, indem das entfernbare Element (42) mittels des Transferringmechanismus (2) und eines zweiten Wulstansetzmechanismus (5) axial nach innen von Positionen axial außerhalb jeweiliger Enden des Gestaltungsformgeberabschnitts (31) bewegt werden, um auf die jeweiligen erweiterten Umschlagheizmembranen (7) zu drücken.

## Revendications

1. Appareil de confection d'un pneumatique non vulcanisé, comprenant un mécanisme (1) de confection de ceinture, un mécanisme (2) de transfert, un mécanisme (3) de confection de pneumatique non vulcanisé comprenant un premier et un second élément d'organe formateur d'épaulement (35A, 35B) ayant des vessies de pliage de nappe (7), un premier mécanisme (4) de réglage de talon et un second mécanisme (5) de réglage de talon, caractérisé en ce que le premier mécanisme (4) de réglage de talon comporte un mécanisme de maintien (41) placé à une première extrémité d'un arbre d'entraînement (13) du mécanisme (1) de confection de ceinture et un élément (42) de transfert de talon et de poussée de la vessie (7) de pliage de nappe, l'élément (42) pouvant être fixé au mécanisme de maintien (41) et séparé de celui-ci, le mécanisme de transfert (2) possède des éléments (23) de joint destinés à se raccorder à l'élément (42), l'élément (42) est maintenu par l'élément de joint (23) et est déplacé vers une position de réglage de talon sur le premier élément formateur d'épaulement (35A) du mécanisme (3) de formation de pneumatique à l'état non vulcanisé, si bien que les plaques d'extrémité de l'élément (42) peuvent pousser la vessie (7) de pliage de nappe placée au niveau du premier élément (35A) d'organe formateur d'épaulement lorsque la vessie (7) est dilatée, et un élément (53) de transfert de talon et de poussée de la vessie (7) de pliage de nappe du second mécanisme (5) de réglage de talon est déplacé par un dispositif d'entraînement (54) vers une position de réglage de talon sur le second élément (35B) d'organe formateur d'épaulement du mécanisme (3) de confection de pneumatique non vulcanisé, si bien que la plaque d'extrémité de l'élément (53) peut pousser la vessie (7) de pliage de nappe disposée sur le second élément (35B) d'organe formateur d'épaulement lorsque la vessie (7) est dilatée.

2. Appareil de confection de pneumatique non vulcanisé selon la revendication 1, caractérisé en ce que le mécanisme de transfert (2) comporte plusieurs éléments (24) de maintien de l'ensemble à ceinture et bande de roulement, chaque élément ayant un segment (24a) et un vérin hydraulique (24b) qui déplace le segment (24a) en direction radiale.

3. Appareil de confection de pneumatique non vulcanisé selon la revendication 1 ou 2, caractérisé en ce que le mécanisme de transfert (2) possède un mécanisme (9) d'extraction de pneumatique non vulcanisé qui comprend un panier récepteur (91) destiné à contenir un pneumatique non vulcanisé et des rouleaux (94) de pression de pneumatique non vulcanisé qui dépassent vers le mécanisme (3) de confection de pneumatique non vulcanisé, le mécanisme (9) étant disposé au niveau d'une partie des segments qui est mobile vers l'avant et vers l'arrière dans la direction radiale.

4. Procédé de formation d'un pneumatique non vulcanisé à l'aide d'une machine qui comprend une section (11) d'organe formateur de ceinture placée coaxialement à un mécanisme de transfert (2), et une section (31) d'organe formateur de mise en forme de pneumatique non vulcanisé comprenant, à ses extrémités axiales, des premier et second éléments (35A, 35B) d'organe formateur d'épaulement et de vessies (7) de pliage de nappe, le procédé comprenant la confection, sur la section (31) d'organe formateur de mise en forme, d'une armature cylindrique de nappes de carcasse, le montage de talon (43, 55) aux deux extrémités de l'armature cylindrique de nappes de carcasse, l'assemblage d'un ensemble (6) à ceinture et bande de roulement sur la section (11) d'organe formateur de ceinture, le transfert de l'ensemble (6) à bande de roulement et ceinture de la section (11) à organe formateur de ceinture par le mécanisme de transfert (2) à une position qui se trouve au centre de la section (31) à organe formateur de mise en forme et la dilatation de la section à organe formateur de mise en forme afin que l'armature cylindrique à nappes de carcasse soit mise en forme dans l'ensemble à ceinture et bande de roulement (6), le pliage des extrémités de l'armature de nappes de carcasse autour des talons (43, 55) par dilatation des vessies de pliage (7), caractérisé par le montage d'un talon (43) sur un élément amovible (42) maintenu de façon amovible dans le premier mécanisme (4) de réglage de talon, ce mécanisme étant monté à l'extrémité axiale de la section (11) d'organe formateur de ceinture et, après formation de l'armature cylindrique de nappes de carcasse, le déplacement du mécanisme de transfert (2) à une position à laquelle il est concentrique au premier mécanisme (4) de réglage de talon, le déplacement du mécanisme de transfert (2) avec l'élément amovible (42) dans la direction axiale afin que le talon (43) soit positionné sur l'armature cylindrique de nappes de carcasse placée sur la section (31) d'organe formateur de mise en forme, la dilatation du premier élément formateur d'épaulement (35A) de la section (31) d'organe formateur de mise en forme dans la direction radiale de manière que le talon (43) soit maintenu, la séparation de l'élément amovible (42) du talon (43) et le déplacement de l'élément amovible (42) vers une position qui se trouve axialement à l'extérieur de l'extrémité de la section (31) d'organe formateur de mise en forme à l'aide du mécanisme de transfert (2).

5. Procédé de formation d'un pneumatique non vulcanisé selon la revendication 4, caractérisé par la consolidation des extrémités repliées de l'armature de nappes de carcasse par déplacement de l'élément amovible (42) à l'aide du mécanisme de transfert (2), et par un second mécanisme (5) de réglage de talon placé axialement à l'intérieur de positions qui se trouvent axialement à l'extérieur des extrémités respectives de la section (31) d'organe formateur de mise en forme de manière que les vessies dilatées respectives de pliage (7) soient poussées.
